# EUROPEAN PATENT APPLICATION

(11) **EP 4 686 180 A1**
(43) Date of publication of application: **28.01.2026**
(21) Application number: 23928056.3
(22) Date of filing: 22.03.2023
(51) Int. Cl.: H04L 69/28, H04W 88/02, H04W 64/00, H04W 24/08, H04W 24/02

(54) **TIMER PROCESSING METHOD AND APPARATUS, STORAGE MEDIUM, AND TERMINAL**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/083215
(87) International publication number: WO 2024/192743

(57) **Abstract**

The present disclosure relates to a timer processing method and apparatus, a storage medium, and a terminal. The method comprises: determining that a timer is running when a terminal starts to perform a GNSS measurement, and performing a first operation on the timer, wherein the timer is a timer related to radio link monitoring, and the first operation comprises a stop operation or a pause operation.

## Description

### TECHNICAL FIELD

The present disclosure relates to the field of communication technology, and in particular to a timer processing method and apparatus, a storage medium, and a terminal.

### BACKGROUND

Currently, 3rd Generation Partnership Project, 3GPP, has agreed that a terminal can perform Global Navigation Satellite System, GNSS, measurement based on a measurement gap.

The time required for the terminal to perform GNSS measurement may be relatively long. When some timers related to Radio Link Monitoring, RLM, expire, Radio Link Failure, RLF, will be triggered, and the terminal will perform Long Term Evolution, LTE, transceiving. However, the terminal cannot support simultaneous GNSS reception and LTE transceiving. Thus, the GNSS measurement is terminated. In addition, when other timers related to RLM expire, the terminal will be triggered to report a report(s) required for performing RLM. However, the terminal does not perform RLM, and the reported report is invalid, thereby wasting the resources occupied by reporting the report.

### SUMMARY

In order to overcome the problems existing in the related art, the present disclosure provides a timer processing method and apparatus, a storage medium, and a terminal.

According to a first aspect of embodiments of the present disclosure, a timer processing method is provided, including:
determining that a timer is running when a terminal starts to perform GNSS measurement, and performing a first operation on the timer, where the timer is a timer related to radio link monitoring, and the first operation includes a stop operation or a pause operation.

According to a second aspect of embodiments of the present disclosure, a timer processing apparatus is provided, including:
a first determination module, configured to determine that a timer is running when a terminal starts to perform GNSS measurement, and perform a first operation on the timer, where the timer is a timer related to radio link monitoring, and the first operation includes a stop operation or a pause operation.

According to a third aspect of embodiments of the present disclosure, a terminal is provided, including:
a processor; and
a memory configured to store instructions executable by the processor;
where the processor is configured to perform steps of the method according to the first aspect.

According to a fourth aspect of embodiments of the present disclosure, a computer-readable storage medium having computer program instructions stored thereon is provided, where, when the computer program instructions are executed by a processor, steps of the method according to the first aspect are implemented.

In the above solution, a stop operation or a pause operation is performed on the timer related to the radio link monitoring, the situation where the GNSS measurement is terminated due to expiration of the timer can be avoided, and the wasting of the resources, occupied by reporting the report due to expiration of the timer, can be avoided.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart showing a timer processing method according to an exemplary embodiment of the present disclosure.
FIG. 2 is a flow chart showing a timer processing method according to an exemplary embodiment of the present disclosure.
FIG. 3 is a flow chart showing a timer processing method according to an exemplary embodiment of the present disclosure.
FIG. 4 is a flow chart showing a timer processing method according to an exemplary embodiment of the present disclosure.
FIG. 5 is a flow chart showing a timer processing method according to an exemplary embodiment of the present disclosure.
FIG. 6 is a flow chart showing a timer processing method according to an exemplary embodiment of the present disclosure.
FIG. 7 is a flow chart showing a timer processing method according to an exemplary embodiment of the present disclosure.
FIG. 8 is a flowchart showing a timer processing method according to an exemplary embodiment of the present disclosure.
FIG. 9 is a flowchart showing a timer processing method according to an exemplary embodiment of the present disclosure.
FIG. 10 is a flowchart showing a timer processing method according to an exemplary embodiment of the present disclosure.
FIG. 11 is a flowchart showing a timer processing method according to an exemplary embodiment of the present disclosure.
FIG. 12 is a flow chart showing a timer processing method according to an exemplary embodiment of the present disclosure.
FIG. 13 is a flow chart showing a timer processing method according to an exemplary embodiment of the present disclosure.
FIG. 14 is a block diagram showing a timer processing apparatus according to an exemplary embodiment of the present disclosure.
FIG. 15 is a block diagram of a terminal according to an exemplary embodiment of the present disclosure.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the present disclosure. Instead, they are merely examples of apparatus and method consistent with some aspects of the present disclosure as detailed in the appended claims.

It should be noted that all actions of acquiring signals, information or data in the present disclosure are carried out in compliance with the relevant data protection laws and policies of the country where the apparatus is located and with the authorization given by the owner of the corresponding apparatus.

In the description of the present disclosure, the terms used, such as "first", "second", and the like, are used to distinguish similar objects and do not have to be understood as a specific order or sequence. In addition, in the description with reference to the accompanying drawings, unless otherwise indicated, the same symbols in different drawings represent the same elements.

In the description of the present disclosure, unless otherwise indicated, "multiple" means two or more than two, and other quantifiers are similar thereto; "at least one item", "one or more items" or similar expressions refer to any combination of these items, including any combination of singular or plural items. For example, at least one item can represent any number; for another example, one or more items among a, b and c can represent: a, b, c, a-b, a-c, b-c, or a-b-c, where a, b, c can be single or multiple; "and/or" is a kind of association relationship describing associated objects, indicating that three relationships can exist, for example, A and/or B can represent: A exists alone, both A and B exist, and B exists alone, where A and B can be singular or plural.

Although operations or steps are described in a specific order in the drawings in some embodiments of the present disclosure, it should not be understood that it is required to perform these operations or steps in the specific order shown or in a serial order, or to perform all the operations or steps shown to obtain the desired results. In some embodiments of the present disclosure, these operations or steps can be performed in series; these operations or steps can also be performed in parallel; or some of these operations or steps can be performed.

For Internet of Things, IOT, terminals, some terminals cannot support simultaneous GNSS reception and LTE transceiving. The validity of the GNSS position fix (positioning) obtained by the terminal can only be maintained for a period of time. After this period of time, the GNSS of the terminal becomes invalid and the terminal is to re-acquire the GNSS position. At present, 3GPP has agreed that terminals can perform GNSS measurement based on the measurement gap. In addition, 3GPP agrees that terminals can autonomously trigger terminals to perform GNSS measurement, or base stations can trigger terminals to perform GNSS measurement.

GNSS power-on positioning is divided into cold start, warm start and hot start. For cold start, warm start or hot start, the time required for the GNSS measurement may be relatively long. When the timer related to RLM expires, RLF will be triggered, and the terminal will perform LTE transceiving. However, the terminal cannot support simultaneous GNSS reception and LTE transceiving. Thus, the GNSS measurement will be terminated. Here, the timer related to RLM can be, for example, a timer T310 and a timer T312. When the terminal performs RLM at the physical layer, if out-of-sync or in-sync is detected, Radio Resource Control, RRC, layer of the terminal is to be indicated with out-of-sync or in-sync to. If the RRC layer of terminal continuously receives N310 out-of-sync indications indicated by the physical layer of terminal, the terminal starts the timer T310. After the timer T310 expires, RLF will be triggered to initiate radio link reestablishment. When N311 in-sync indications are received during the running of the timer T310, the timer T310 is stopped, that is, the timer T310 is ended. The motivation of the timer T312 is to accelerate the recovery process of RLF by triggering the radio link reestablishment process faster using a timer shorter than the timer T310. The trigger event for starting the timer T312 can be configured by the network. After the corresponding GNSS measurement is triggered, if the timer T310 is running, the timer T312 is started, and radio link reestablishment is triggered after the timer T312 expires. When N311 in-sync indications are received or a handover command is received during the running of the timer T312, the timer T312 can be stopped, that is, the timer T312 is ended.

In addition, when the timer related to RLM expires, the terminal will be triggered to report a report required for performing RLM. However, the terminal does not perform RLM, so the reported report is invalid, thereby wasting the resources occupied by reporting the report. The timer related to RLM here can also be, for example, a timer T314 or a timer T315. The timer T314 is used to trigger the early reporting of physical layer problems. When the timer T314 expires, the terminal is triggered to report physical layer problems. The timer T315 is used for early reporting of physical layer improvements. When the timer T315 expires, the terminal is triggered to report improvement reports. When the physical layer detects early-out-of-sync, the early-out-of-sync will be indicated to the RRC layer. If the RRC layer receives N310 early-out-of-sync indications from the physical layer in succession, the terminal starts the timer T314. If the timer T314 expires, the physical layer problem is to be reported. If the RRC layer receives N311 early-in-sync indications from the physical layer in succession, the terminal starts the timer T315. If the timer T315 expires, the terminal reports the physical layer improvement report. In addition, the timer T314 is not stopped after the timer T315 is started, but is stopped when the RRC layer receives N311 in-sync indications from the physical layer in succession.

Therefore, some embodiments of the present disclosure provide a timer processing method and apparatus, a storage medium and a terminal, which are explained below in conjunction with the accompanying drawings.

First, it should be noted that with respect to the functions or start conditions of the timer T310, the timer T312, the timer T314 and the timer T315 involved in the following embodiments provided by the present disclosure, the explanations and descriptions of the above-mentioned related timers can be referred to, and will not be elaborated in the following embodiments.

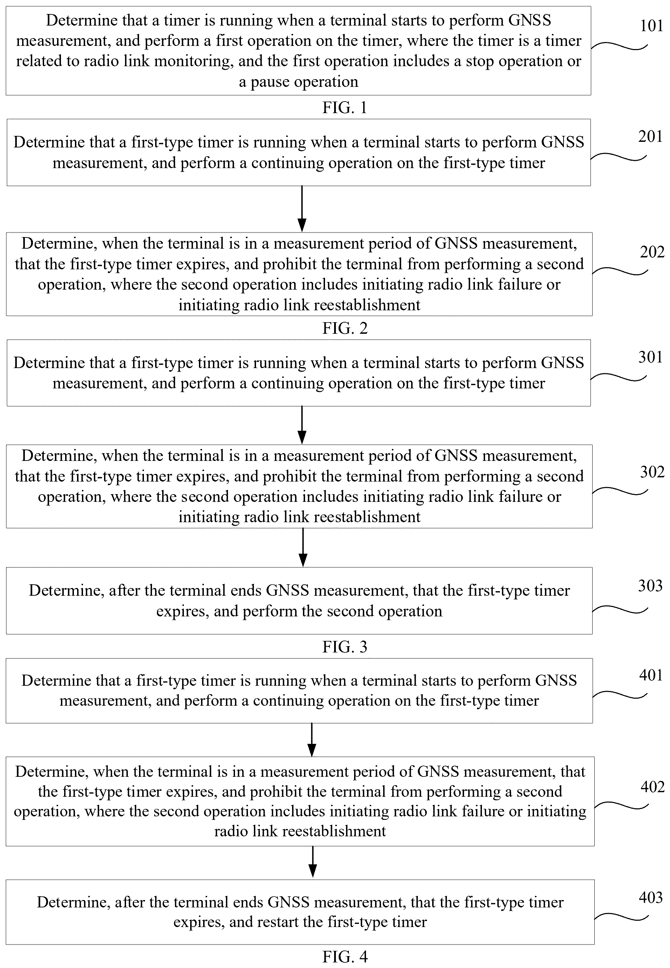

FIG. 1 is the flow chart showing the timer processing method according to an exemplary embodiment. The method may be performed by a terminal. As shown in FIG. 1, the method may include the followings.

In step 101, a timer is determined as running when the terminal starts to perform GNSS measurement, and a first operation is performed on the timer, where the timer is a timer related to radio link monitoring, and the first operation includes a stop operation or a pause operation.

It should be noted that the stop operation directly ends the timing of the timer, that is, the timing of the timer is ended, and the timer is to be restarted and start the next timing again; while the pause operation pauses the timing of the timer, and the timer is to continue timing from the last pause position after resuming operation.

By performing the stop operation or the pause operation on the timer related to the radio link monitoring in the above manner, the situation where the GNSS measurement is terminated due to expiration of the timer can be avoided, and the wasting of the resources, occupied by reporting the report due to expiration of the timer, can be avoided.

In some embodiments, the timer may be the timer T310, the timer T312, the timer T314, or the timer T315.

In some embodiments, the timer includes the timer T310, the first operation includes the stop operation, and the above step 101 can be implemented in the following manner: the timer T310 is determined as running when the terminal starts to perform the GNSS measurement, and the stop operation is performed on the timer T310.

Accordingly, the situation where the GNSS measurement is terminated due to expiration of the timer T310 can be avoided.

In some embodiments, the timer includes the timer T310, the first operation includes the pause operation, and the above step 101 can be implemented in the following manner: the timer T310 is determined as running when the terminal starts to perform the GNSS measurement, and the pause operation is performed on the timer T310.

Accordingly, the situation where the GNSS measurement is terminated due to the expiration of timer T310 can be avoided.

In some embodiments, the timer includes the timer T312, the first operation includes the stop operation, and the above step 101 can be implemented in the following manner: the timer T312 is determined as running when the terminal starts to perform the GNSS measurement, and the stop operation is performed on the timer T312.

Accordingly, the situation where the GNSS measurement is terminated due to expiration of the timer T312 can be avoided.

In some embodiments, the timer includes the timer T312, the first operation includes the pause operation, and the above step 101 can be implemented in the following manner: the timer T312 is determined as running when the terminal starts to perform the GNSS measurement, and the pause operation is performed on the timer T312.

Accordingly, the situation where the GNSS measurement is terminated due to expiration of the timer T312 can be avoided.

In some embodiments, the timer includes the timer T314, the first operation includes the stop operation, and the above step 101 can be implemented in the following manner: the timer T314 is determined as running when the terminal starts to perform the GNSS measurement, and the stop operation is performed on the timer T314.

Accordingly, the wasting of the resources, occupied by reporting the physical layer problem due to expiration of the timer T314, can be avoided.

In some embodiments, the timer includes the timer T314, the first operation includes the pause operation, and the above step 101 can be implemented in the following manner: the timer T314 is determined as running when the terminal starts to perform the GNSS measurement, and the pause operation is performed on the timer T314.

Accordingly, the wasting of the resources, occupied by reporting the physical layer problem due to expiration of the timer T314, can be avoided.

In some embodiments, the timer includes the timer T315, the first operation includes the stop operation, and the above step 101 can be implemented in the following manner: the timer T315 is determined as running when the terminal starts to perform the GNSS measurement, and the stop operation is performed on the timer T315.

Accordingly, the wasting of the resources, occupied by reporting the improvement report due to expiration of the timer T315, can be avoided.

In some embodiments, the timer includes the timer T315, the first operation includes the pause operation, and the above step 101 can be implemented in the following manner: the timer T315 is determined as running when the terminal starts to perform the GNSS measurement, and the pause operation is performed on the timer T315.

Accordingly, the wasting of the resources, occupied by reporting the improvement report due to expiration of the timer T315, can be avoided.

In some embodiments, whether the terminal starts to perform the GNSS measurement may be determined by determining whether the current timepoint is the GNSS measurement start timepoint. When the current timepoint is the GNSS measurement start timepoint, it is determined that the terminal starts to perform the GNSS measurement.

In some embodiments, the GNSS measurement start timepoint may be a start timepoint of the measurement gap for the GNSS measurement configured by the network.

In some embodiments, for the GNSS measurement triggered by a base station, the GNSS measurement start timepoint may be a timepoint obtained by adding a first preset duration based on a timepoint when the terminal receives the GNSS measurement command sent by the base station, where the first preset duration may be 0. The first preset duration may be agreed upon by a protocol, or the first preset duration may be configured by the network.

In some embodiments, for the GNSS measurement triggered autonomously by the terminal, the GNSS measurement start timepoint may be a timepoint obtained by adding a second preset duration based on a timepoint when the GNSS validity duration timer of the terminal expires. The second preset duration may be agreed upon by the protocol, or the second preset duration may be configured by the network, for example, the second preset duration may be 0.

In some embodiments, the timer includes a first-type timer, the first-type timer includes the timer T310 and the timer T312, and the above step of performing the first operation on the timer may include: performing the stop operation or the pause operation on the timer T310 and the timer T312.

As can be seen from the above content, the timer T312 is started when the timer T310 is running. By using the timer T312 which is shorter than the timer T310, the radio link reestablishment procedure can be triggered more quickly, thereby accelerating the RLF recovery procedure.

Therefore, when it is determined that the timer T310 and the timer T312 are both running when the terminal starts to perform the GNSS measurement, both the timer T310 and the timer T312 can be stopped or paused to avoid the situation where the GNSS measurement is terminated due to expiration of the timer T310 or the timer T312.

In some embodiments, the timer includes the first-type timer, the first-type timer includes the timer T310 and the timer T312, the first operation includes the stop operation, the pause operation or the continuing operation, and the above-mentioned step of performing the first operation on the timer may include: performing the continuing operation on the timer T310; and performing the stop operation or the pause operation on the timer T312.

As can be seen from the above content, since the timer T312 is a shorter timer than the timer T310, and when referring to performing the continuing operation on the timer, it means that no instruction is to be issued to operate the timer. Therefore, if it is determined that the timer T310 and the timer T312 are both running when the terminal starts to perform the GNSS measurement, the stop operation or the pause operation can be performed only on the timer T312, and the continuing operation can be performed on the timer T310, that is, only the timer T312 is operated using instructions, and the timer T310 is not to be operated using instructions, thereby reducing the terminal resource consumption.

FIG. 2 is the flow chart showing the timer processing method according to an exemplary embodiment. The method may be performed by a terminal. The first operation includes the continuing operation, the timer includes the first-type timer, the first-type timer includes the timer T310 or the timer T312, and as shown in FIG. 2, the method may include the followings.

In step 201, a first-type timer is determined as running when the terminal starts to perform the GNSS measurement, and the continuing operation is performed on the first-type timer.

In step 202, when the terminal is in a measurement period of the GNSS measurement, the first-type timer is determined as expiring, and the terminal is prohibited from performing a second operation, where the second operation includes initiating radio link failure or initiating radio link reestablishment.

The continuing operation means not interfering with operation of the timer and allowing the timer to continue timing.

It should be noted that step 201 is an implementation of step 101.

It should be noted that the first-type timer is a timer that triggers RLF upon expiration.

In some embodiments, when the second operation includes initiating radio link failure, step 202 may be implemented in the following manner: it is determined that the first-type timer expires when the terminal is in the measurement period of the GNSS measurement, the terminal is prohibited from initiating the radio link failure.

In some embodiments, when the second operation includes initiating radio link reestablishment, step 202 may be implemented in the following manner: it is determined that the first-type timer expires when the terminal is in the measurement period of the GNSS measurement, the terminal is prohibited from initiating the radio link reestablishment. It should be noted that in these embodiments, the terminal may be allowed to initiate radio link failure.

By using the above manner, if it is determined that the first-type timer expires when the terminal is in the measurement period of the GNSS measurement, the terminal is prohibited from initiating the radio link failure or radio link reestablishment, thereby preventing the terminal from performing LTE transceiving, and enabling the terminal to continue the GNSS measurement.

In some embodiments, the first-type timer includes the timer T310, and the above step 201 may include: determining that the timer T310 is running when the terminal starts to perform the GNSS measurement, and performing the continuing operation on the timer T310.

In addition, the above step 202 may include: if it is determined that the timer T310 expires when the terminal is in the measurement period of the GNSS measurement, the terminal is prohibited from performing the second operation, where the second operation includes initiating the radio link failure or initiating the radio link reestablishment.

Accordingly, if it is determined that the timer T310 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement.

In some embodiments, the first-type timer includes the timer T312, and the above step 201 may include: determining that the timer T312 is running when the terminal starts to perform the GNSS measurement, and performing the continuing operation on the timer T312.

In addition, the above step 202 may include: if it is determined that the timer T312 expires when the terminal is in the measurement period of the GNSS measurement, the terminal is prohibited from performing the second operation, where second operation includes initiating the radio link failure or initiating the radio link reestablishment.

Accordingly, if it is determined that the timer T312 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement.

FIG. 3 is the flow chart showing the timer processing method according to an exemplary embodiment. The method may be performed by a terminal. The first operation includes the continuing operation, the timer includes the first-type timer, the first-type timer includes the timer T310 or the timer T312, and as shown in FIG. 3, the method may include the followings.

In step 301, a first-type timer is determined as running when the terminal starts to perform the GNSS measurement, and the continuing operation is performed on the first-type timer.

In step 302, when the terminal is in a measurement period of the GNSS measurement, the first-type timer is determined as expiring, and the terminal is prohibited from performing a second operation, where the second operation includes initiating radio link failure or initiating radio link reestablishment.

In step 303, after the terminal ends the GNSS measurement, the first-type timer is determined as expiring, and the second operation is performed.

It should be noted that step 301 is an implementation of step 101. In addition, with respect to explanation of the continuing operation and the second operation, the above-mentioned related embodiments can be referred to, and will not be elaborated here.

By using the above manner, if it is determined that the first-type timer expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the first-type timer expires after the terminal ends the GNSS measurement, the terminal initiates the radio link failure or the radio link reestablishment to complete reestablishment of the terminal's radio link.

In some embodiments, the ending of the GNSS measurement may include ending of the GNSS measurement duration, or that the terminal ends the GNSS measurement in advance before the ending of the GNSS measurement duration, or that the GNSS measurement is interrupted due to other reasons. The GNSS measurement duration may be configured by the network or agreed upon by the protocol.

In some embodiments, the first-type timer includes the timer T310, and the above step 301 may include: determining that the timer T310 expires when the terminal starts to perform the GNSS measurement, and performing the continuing operation on the timer T310.

In addition, the above step 302 may include: determining that the timer T310 expires when the terminal is in the measurement period of the GNSS measurement, prohibiting the terminal from performing the second operation, where the second operation includes initiating the radio link failure or initiating the radio link reestablishment.

In addition, the above step 303 may include: determining that the timer T310 expires after the terminal ends the GNSS measurement, performing the second operation.

Accordingly, if it is determined that the timer T310 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the timer T310 expires after the terminal ends the GNSS measurement, the terminal initiates the radio link failure or the radio link reestablishment to complete reestablishment of the terminal's radio link.

In some embodiments, the first-type timer includes the timer T312, and the above step 301 may include: determining that the timer T312 is running when the terminal starts to perform the GNSS measurement, performing the continuing operation on the timer T312.

In addition, the above step 302 may include: determining that the timer T312 expires when the terminal is in the measurement period of the GNSS measurement, prohibiting the terminal from performing the second operation, where the second operation includes initiating the radio link failure or initiating the radio link reestablishment.

In addition, the above step 303 may include: determining that the timer T312 expires after the terminal ends the GNSS measurement, performing the second operation.

Accordingly, if it is determined that the timer T312 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the timer T312 expires after the terminal ends the GNSS measurement, the terminal initiates the radio link failure or the radio link reestablishment to complete reestablishment of the terminal's radio link.

FIG. 4 is the flow chart showing the timer processing method according to an exemplary embodiment. The method may be performed by a terminal. The first operation includes the continuing operation, the timer includes the first-type timer, the first-type timer includes the timer T310 or the timer T312, and as shown in FIG. 4, the method may include the followings.

In step 401, the first-type timer is determined as running when the terminal starts to perform the GNSS measurement, and the continuing operation is performed on the first-type timer.

In step 402, when the terminal is in a measurement period of the GNSS measurement, the first-type timer is determined as expiring, and the terminal is prohibited from performing a second operation, where the second operation includes initiating a radio link failure or initiating a radio link reestablishment.

In step 403, after the terminal ends the GNSS measurement, the first-type timer is determined as expiring, and the first-type timer is restarted.

It should be noted that step 401 is an implementation of step 101. In addition, with respect to explanation of the continuing operation and the second operation, the above-mentioned related embodiments can be referred to, and will not be elaborated here.

By using the above manner, if it is determined that the first-type timer expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the first-type timer expires after the terminal ends the GNSS measurement, instead of directly controlling the terminal to perform the second operation, the first-type timer is restarted to provide time for the terminal to determine whether a link problem occurs.

In some embodiments, the first-type timer includes the timer T310, and the above step 401 may include: determining that the timer T310 is running when the terminal starts to perform the GNSS measurement, performing the continuing operation on the timer T310.

In addition, the above step 402 may include: determining that the timer T310 expires when the terminal is in the measurement period of the GNSS measurement, prohibiting the terminal from performing the second operation, where the second operation includes initiating the radio link failure or initiating the radio link reestablishment.

In addition, the above step 403 may include: determining that the timer T310 expires after the terminal ends the GNSS measurement, restarting the timer T310.

Accordingly, if it is determined that the timer T310 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the timer T310 expires after the terminal ends the GNSS measurement, instead of directly controlling the terminal to perform the second operation, the timer T310 is restarted to provide time for the terminal to determine whether a link problem occurs.

In some embodiments, the first-type timer includes the timer T312, and the above step 401 may include: determining that the timer T312 is running when the terminal starts to perform the GNSS measurement, performing the continuing operation on the timer T312.

In addition, the above step 402 may include: determining that the timer T312 expires when the terminal is in the measurement period of the GNSS measurement, prohibiting the terminal from performing the second operation, where the second operation includes initiating the radio link failure or initiating the radio link reestablishment.

In addition, the above step 403 may include: determining that the timer T312 expires after the terminal ends the GNSS measurement, restarting the timer T312.

Accordingly, if it is determined that the timer T312 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the timer T310 expires after the terminal ends the GNSS measurement, instead of directly controlling the terminal to perform the second operation, the timer T312 is restarted to provide time for the terminal to determine whether a link problem occurs.

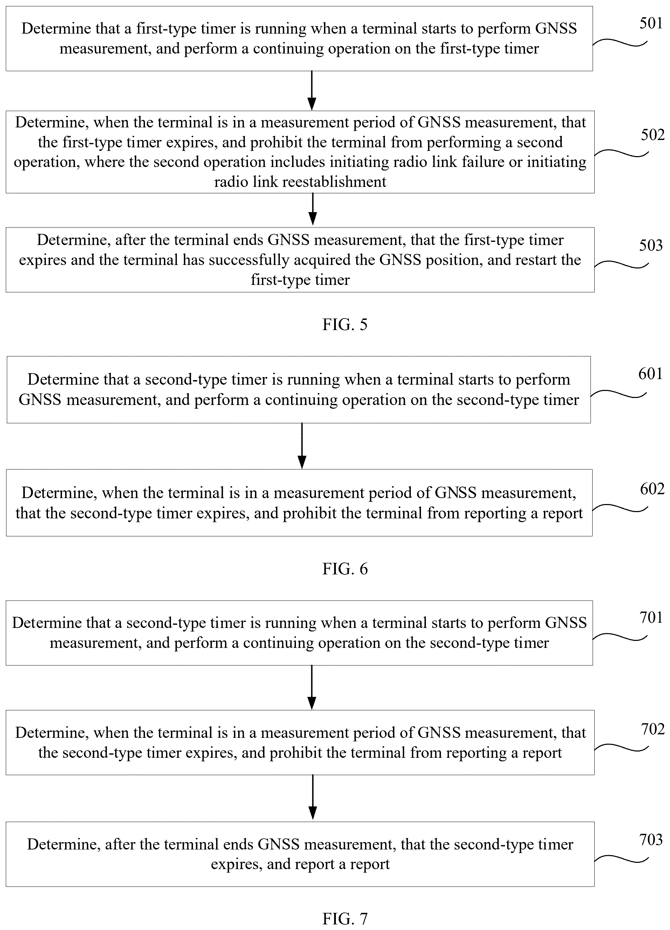

FIG. 5 is the flow chart showing the timer processing method according to an exemplary embodiment. The method may be performed by a terminal. The first operation includes the continuing operation, the timer includes the first-type timer, the first-type timer includes the timer T310 or the timer T312, and as shown in FIG. 5, the method may include the followings.

In step 501, a first-type timer is determined as running when the terminal starts to perform the GNSS measurement, and the continuing operation is performed on the first-type timer.

In step 502, when the terminal is in a measurement period of the GNSS measurement, the first-type timer is determined as expiring, and the terminal is prohibited from performing a second operation, where the second operation includes initiating radio link failure or initiating radio link reestablishment.

In step 503, after the terminal ends the GNSS measurement, the first-type timer is determined as expiring and the terminal has successfully acquired the GNSS position, and the first-type timer is restarted.

It should be noted that step 501 is an implementation of step 101. In addition, with respect to explanation of the continuing operation and the second operation, the above-mentioned related embodiments can be referred to, and will not be elaborated here.

By using the above manner, if it is determined that the first-type timer expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, if it is determined that the first-type timer expires and the terminal has successfully acquired the GNSS position after the terminal ends the GNSS measurement, instead of directly controlling the terminal to perform the second operation, the first-type timer is restarted to provide time for the terminal to determine whether a link problem occurs.

In some embodiments, the first-type timer includes the timer T310, and the above step 501 may include: determining that the timer T310 is running when the terminal starts to perform the GNSS measurement, performing the continuing operation on the timer T310.

In addition, the above step 502 may include: determining that the timer T310 expires when the terminal is in the measurement period of the GNSS measurement, prohibiting the terminal from performing the second operation, where second operation includes initiating the radio link failure or initiating the radio link reestablishment.

In addition, the above step 503 may include: determining that the timer T310 expires and the terminal has successfully acquired the GNSS position after the terminal ends the GNSS measurement, restarting the timer T310.

Accordingly, if it is determined that the timer T310 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, after the terminal ends the GNSS measurement, if it is determined that the first-type timer expires and the terminal has successfully acquired the GNSS position, instead of directly controlling the terminal to perform the second operation, the timer T310 is restarted to provide time for the terminal to determine whether a link problem has occurred.

In some embodiments, the first-type timer includes the timer T312, and the above step 501 may include: determining the timer T312 as running when the terminal starts to perform the GNSS measurement, performing the continuing operation on the timer T312.

In addition, the above step 502 may include: determining the timer T312 as expiring when the terminal is in the measurement period of the GNSS measurement, prohibiting the terminal from performing the second operation, where the second operation includes initiating the radio link failure or initiating the radio link reestablishment.

In addition, the above step 503 may include: after the terminal ends the GNSS measurement, determining that the timer T312 expires and the terminal has successfully acquired the GNSS position, restarting the timer T312.

Accordingly, if it is determined that the timer T312 expires when the terminal is in the measurement period of the GNSS measurement, the terminal is prohibited from initiating the radio link failure or the radio link reestablishment, thereby preventing the terminal from performing LTE transceiving, and enabling the terminal to continue the GNSS measurement. In addition, after the terminal ends the GNSS measurement, if it is determined that the first-type timer expires and the terminal has successfully acquired the GNSS position, instead of directly controlling the terminal to perform the second operation, the timer T312 is restarted to provide time for the terminal to determine whether a link problem has occurred.

FIG. 6 is the flow chart showing the timer processing method according to an exemplary embodiment. The method may be performed by a terminal. The first operation includes the continuing operation, the timer includes a second-type timer, and the second-type timer includes the timer T314 or the timer T315. As shown in FIG. 6, the method may include the followings.

In step 601, the second-type timer is determined as running when the terminal starts to perform the GNSS measurement, the continuing operation is performed on the second-type timer.

In step 602, when the terminal is in a measurement period of the GNSS measurement, the second-type timer is determined as expiring, and the terminal is prohibited from reporting a report.

It should be noted that step 601 is an implementation of step 101. In addition, with respect to explanation of the continuing operation, the above-mentioned related embodiments can be referred to, and will not be elaborated here.

The second-type timer is a timer that triggers the terminal to report a report when the second-type timer expires. When the second-type timer includes the timer T314, the report indicates a physical layer problem, and the report notifies the network of early detection of the physical layer problem; when the second-type timer includes the timer T315, the report indicates an improvement report, and the report notifies the network of early detection of the physical layer improvement.

By using the above manner, if it is determined that the second-type timer expires when the terminal is in the measurement period of the GNSS measurement, the terminal is prohibited from reporting the report, thereby avoiding the wasting of the resources, occupied by reporting the report due to expiration of the second-type timer.

In some embodiments, the second-type timer includes the timer T314, and the above step 601 may include: determining that the timer T314 is running when the terminal starts to perform the GNSS measurement, performing the continuing operation on the timer T314.

In addition, the above step 602 may include: determining that the timer T314 expires when the terminal is in the measurement period of the GNSS measurement, prohibiting the terminal from reporting a physical layer problem.

Accordingly, the wasting of the resources occupied by reporting the physical layer problem due to expiration of the timer T314 is avoided.

In some embodiments, the second-type timer includes the timer T315, and the above step 601 may include: determining that the timer T315 is running when the terminal starts to perform the GNSS measurement, performing the continuing operation on the timer T315.

In addition, the above step 602 may include: determining that the timer T315 expires when the terminal is in the measurement period of the GNSS measurement, prohibiting the terminal from reporting an improvement report.

Accordingly, the wasting of the resources occupied by reporting the improvement report due to expiration of the timer T315 is avoided.

FIG. 7 is the flow chart showing the timer processing method according to an exemplary embodiment. The method may be performed by a terminal. The first operation includes the continuing operation, the timer includes a second-type timer, and the second-type timer includes the timer T314 or the timer T315. As shown in FIG. 7, the method may include the followings.

In step 701, the second-type timer is determined as running when the terminal starts to perform the GNSS measurement, and the continuing operation is performed on the second-type timer.

In step 702, when the terminal is in a measurement period of the GNSS measurement, the second-type timer is determined as expiring, and the terminal is prohibited from reporting a report.

In step 703, after the terminal ends the GNSS measurement, the second-type timer is determined as expiring, and the report is reported.

It should be noted that step 701 is an implementation of step 101. In addition, with respect to explanation of the continuing operation and the report, the above-mentioned related embodiments can be referred to, and will not be elaborated here.

By using the above manner, if it is determined that the second-type timer expires when the terminal is in the measurement period of the GNSS measurement, the terminal is prohibited from reporting the report, thereby avoiding the wasting of the resources, occupied by reporting the report due to expiration of the second-type timer. In addition, if it is determined that the second-type timer expires after the terminal ends the GNSS measurement, the terminal reports the report to facilitate the completion of subsequent related operations based on the report.

In some embodiments, the second-type timer includes the timer T314, and the above step 701 may include: determining that the timer T314 is running when the terminal starts to perform the GNSS measurement, performing the continuing operation on the timer T314.

In addition, the above step 702 may include: determining that the timer T314 expires when the terminal is in the measurement period of the GNSS measurement, prohibiting the terminal from reporting the report.

Accordingly, the above step 703 may include: determining that the timer T314 expires after the terminal ends the GNSS measurement, reporting the physical layer problem.

Accordingly, if it is determined that the timer T314 expires when the terminal is in the measurement period of the GNSS measurement, the terminal is prohibited from reporting physical layer problems, thereby avoiding the wasting of the resources, occupied by reporting physical layer problems due to expiration of the timer T314. In addition, if it is determined that the timer T314 expires after the terminal ends the GNSS measurement, the terminal reports the physical layer problem to facilitate the completion of subsequent related operations based on the physical layer problem.

In some embodiments, the second-type timer includes the timer T315, and the above step 701 may include: determining that the timer T315 is running when the terminal starts to perform the GNSS measurement, performing the continuing operation on the timer T315.

In addition, the above step 702 may include: determining that the timer T315 expires when the terminal is in the measurement period of the GNSS measurement, prohibiting the terminal from reporting the improvement report.

Accordingly, the above step 703 may include: determining that the timer T315 expires after the terminal ends the GNSS measurement, reporting the improvement report.

Accordingly, if it is determined that the timer T315 expires when the terminal is in the measurement period of the GNSS measurement, the terminal is prohibited from reporting an improvement report, thereby avoiding the wasting of the resources, occupied by reporting the improvement report due to expiration of the timer T315. In addition, if it is determined that the timer T315 expires after the terminal ends the GNSS measurement, the terminal reports the improvement report to facilitate the completion of subsequent related operations based on the improvement report.

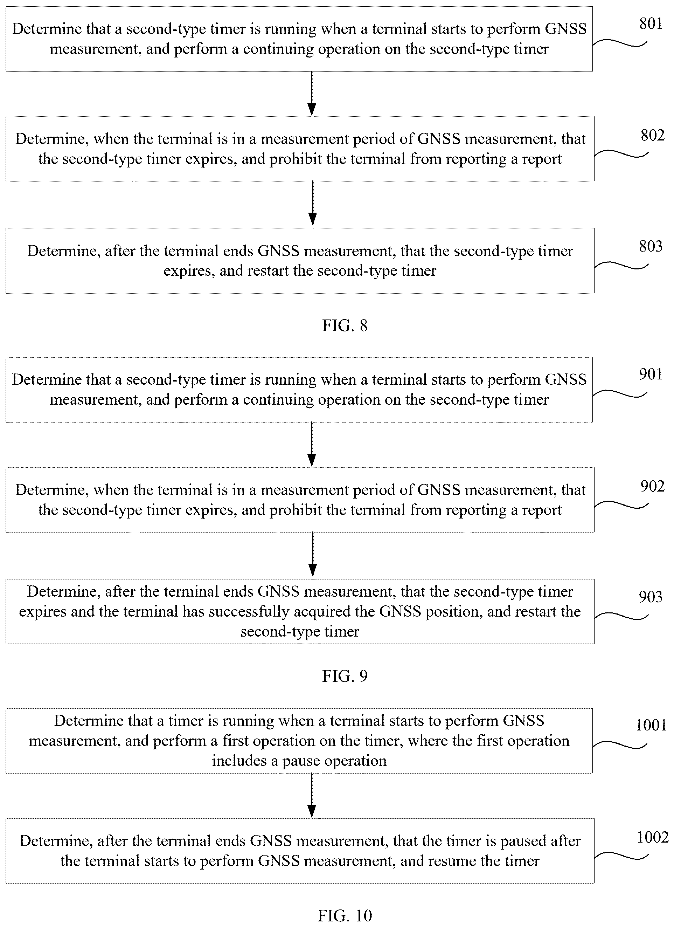

FIG. 8 is the flow chart showing the timer processing method according to an exemplary embodiment. The method may be performed by a terminal. The first operation includes the continuing operation, the timer includes the second-type timer, and the second-type timer includes the timer T314 or the timer T315. As shown in FIG. 8, the method may include the followings.

In step 801, the second-type timer is determined as running when the terminal starts to perform the GNSS measurement, and the continuing operation is performed on the second-type timer.

In step 802, the second-type timer is determined as expiring when the terminal is in a measurement period of the GNSS measurement, and the terminal is prohibited from reporting a report.

In step 803, the second-type timer is determined as expiring after the terminal ends the GNSS measurement, and the second-type timer is restarted.

It should be noted that step 801 is an implementation of step 101. In addition, with respect to explanation of the continuing operation and the report, the above-mentioned related embodiments can be referred to, and will not be elaborated here.

By using the above manner, if it is determined that the second-type timer expires when the terminal is in the measurement period of the GNSS measurement, the terminal is prohibited from reporting the report, thereby avoiding the wasting of the resources, occupied by reporting the report due to expiration of the second-type timer. In addition, if it is determined that the second-type timer expires after the terminal ends the GNSS measurement, instead of directly controlling reporting of the terminal, the second-type timer is restarted to provide time for the terminal to determine whether to report the report.

In some embodiments, the second-type timer includes the timer T314, and the above step 801 may include: determining that the timer T314 is running when the terminal starts to perform the GNSS measurement, performing the continuing operation on the timer T314.

In addition, the above step 802 may include: determining that the timer T314 expires when the terminal is in the measurement period of the GNSS measurement, prohibiting the terminal from reporting the physical layer problem.

In addition, the above step 803 may include: determining that the timer T314 expires after the terminal ends the GNSS measurement, restarting the timer T314.

Accordingly, if it is determined that the timer T314 expires when the terminal is in the measurement period of the GNSS measurement, the terminal is prohibited from reporting physical layer problems, thereby avoiding the wasting of the resources, occupied by reporting physical layer problems due to expiration of the timer T314. In addition, if it is determined that the timer T314 expires after the terminal ends the GNSS measurement, instead of directly controlling the terminal to report the physical layer problem, the timer T314 is restarted to provide time for the terminal to determine whether to report the physical layer problem.

In some embodiments, the second-type timer includes the timer T315, and the above step 801 may include: determining that the timer T315 is running when the terminal starts to perform the GNSS measurement, performing the continuing operation on the timer T315.

In addition, the above step 802 may include: determining that the timer T315 expires when the terminal is in the measurement period of the GNSS measurement, prohibiting the terminal from reporting the improvement report.

In addition, the above step 803 may include: determining that the timer T315 expires after the terminal ends the GNSS measurement, restarting the timer T315.

Accordingly, if it is determined that the timer T315 expires when the terminal is in the measurement period of the GNSS measurement, the terminal is prohibited from reporting an improvement report, thereby avoiding the wasting of the resources, occupied by reporting the improvement report due to expiration of the timer T315. In addition, if it is determined that the timer T315 expires after the terminal ends the GNSS measurement, instead of directly controlling the terminal to report the improvement report, the timer T315 is restarted to provide time for the terminal to determine whether to report the improvement report.

FIG. 9 is the flow chart showing the timer processing method according to an exemplary embodiment. The method may be performed by a terminal. The first operation includes the continuing operation, the timer includes the second-type timer, and the second-type timer includes the timer T314 or the timer T315. As shown in FIG. 9, the method may include the followings.

In step 901, the second-type timer is determined as running when the terminal starts to perform the GNSS measurement, the continuing operation is performed on the second-type timer.

In step 902, the second-type timer is determined as expiring when the terminal is in a measurement period of the GNSS measurement, the terminal is prohibited from reporting a report.

In step 903, after the terminal ends the GNSS measurement, it is determined that the second-type timer expires and the terminal has successfully acquired the GNSS position, the second-type timer is restarted.

It should be noted that step 901 is an implementation of step 101. In addition, with respect to explanation of the continuing operation and the report, the above-mentioned related embodiments can be referred to, and will not be elaborated here.

By using the above manner, if it is determined that the second-type timer expires when the terminal is in the measurement period of the GNSS measurement, the terminal is prohibited from reporting the report, thereby avoiding the wasting of the resources, occupied by reporting the report due to the overtime of the second-type timer. In addition, after the terminal ends the GNSS measurement, if it is determined that the second-type timer expires and the terminal has successfully obtained the GNSS position, the second-type timer is restarted to provide time for the terminal to determine whether to report the report.

In some embodiments, the second-type timer includes the timer T314, and the above step 901 may include: determining that the timer T314 is running when the terminal starts to perform the GNSS measurement, performing the continuing operation on the timer T314.

In addition, the above step 902 may include: determining that the timer T314 expires when the terminal is in the measurement period of the GNSS measurement, prohibiting the terminal from reporting a physical layer problem.

In addition, the above step 903 may include: after the terminal ends the GNSS measurement, determining that the timer T314 expires and the terminal has successfully acquired the GNSS position, restarting the timer T314.

Accordingly, if it is determined that the timer T314 expires when the terminal is in the measurement period of the GNSS measurement, the terminal is prohibited from reporting physical layer problems, thereby avoiding the wasting of the resources, occupied by reporting physical layer problems due to expiration of the timer T314. In addition, after the terminal ends the GNSS measurement, if it is determined that the timer T314 expires and the terminal has successfully acquired the GNSS position, the timer T314 is restarted to provide time for the terminal to determine whether it is to report the physical layer problem.

In some embodiments, the second-type timer includes the timer T315, and the above step 901 may include: determining that the timer T315 is running when the terminal starts to perform the GNSS measurement, performing the continuing operation on the timer T315.

In addition, the above step 902 may include: determining that the timer T315 expires when the terminal is in the measurement period of the GNSS measurement, prohibiting the terminal from reporting the improvement report.

In addition, the above step 903 may include: after the terminal ends the GNSS measurement, determining that the timer T315 expires and the terminal has successfully acquired the GNSS position, restarting the timer T315.

Accordingly, if it is determined that the timer T315 expires when the terminal is in the measurement period of the GNSS measurement, the terminal is prohibited from reporting an improvement report, thereby avoiding the wasting of the resources, occupied by reporting the improvement report due to expiration of the timer T315. In addition, after the terminal ends the GNSS measurement, if it is determined that the timer T315 expires and the terminal has successfully acquired the GNSS position, the timer T315 is restarted to provide time for the terminal to determine whether it is to report the improvement report.

FIG. 10 is the flow chart showing the timer processing method according to an exemplary embodiment. The method may be performed by a terminal. As shown in FIG. 10, the method includes the following steps.

In step 1001, the timer is determined as running when the terminal starts to perform the GNSS measurement, and a first operation is performed on the timer, where the first operation includes a pause operation.

In step 1002, after the terminal ends the GNSS measurement, the timer is determined as being paused after the terminal starts to perform the GNSS measurement, and the timer is resumed.

The "paused" indicates that a pause operation has been performed. With respect to explanations of the pause operation, the above-mentioned related embodiments can be referred to, and will not be elaborated here.

The timer may be the timer T310, the timer T312, the timer T314 or the timer T315.

By using the above manner, if it is determined that the timer is running when the terminal starts to perform the GNSS measurement, the pause operation is performed on the timer, thereby avoiding the situation where the GNSS measurement is terminated due to expiration of the timer, and avoiding the wasting of the resources, occupied by reporting the report due to expiration of the timer. In addition, after the terminal ends the GNSS measurement, if it is determined that the timer has been paused after the terminal starts to perform the GNSS measurement, the timer is resumed, so that the timer can work normally, and the radio link can be reestablished or report can be reported when the timer expires.

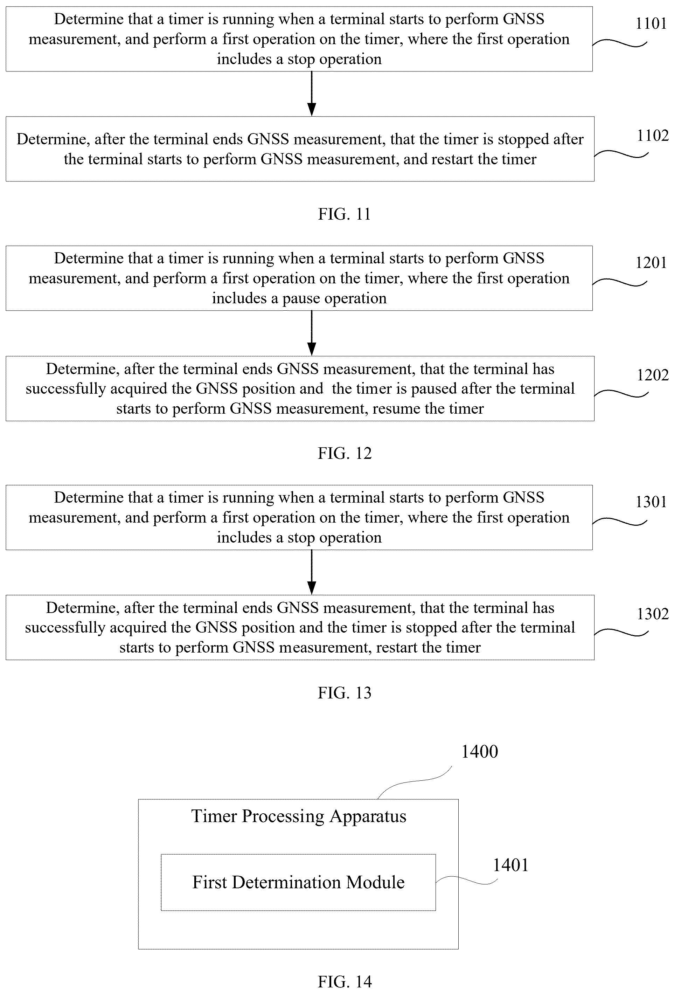

FIG. 11 is the flow chart showing the timer processing method according to an exemplary embodiment. The method may be performed by a terminal. As shown in FIG. 11, the method includes the following steps.

In step 1101, the timer is determined as running when the terminal starts to perform the GNSS measurement, and a first operation is performed on the timer, where the first operation includes a stop operation.

In step 1102, after the terminal ends the GNSS measurement, the timer is determined as being stopped after the terminal starts to perform the GNSS measurement, and the timer is restarted.

The "stopped" indicates that the stop operation has been performed. With respect to explanations of the stop operation, the above-mentioned related embodiments can be referred to, and will not be elaborated here.

The timer may be the timer T310, the timer T312, the timer T314 or the timer T315.

By using the above manner, if it is determined that the timer is running when the terminal starts to perform the GNSS measurement, the stop operation is performed on the timer, thereby avoiding the situation where the GNSS measurement is terminated due to expiration of the timer, and avoiding the wasting of the resources occupied by reporting the report due to expiration of the timer. In addition, after the terminal ends the GNSS measurement, if it is determined that the timer has been stopped after the terminal starts to perform the GNSS measurement, the timer is restarted, so that the timer can work normally, and the radio link can be reestablished or report can be reported when the timer expires.

FIG. 12 is the flow chart showing the timer processing method according to an exemplary embodiment. The method may be performed by a terminal. As shown in FIG. 12, the method includes the following steps.

In step 1201, the timer is determined as running when the terminal starts to perform the GNSS measurement, and a first operation is performed on the timer, where the first operation includes a pause operation.

In step 1202, after the terminal ends the GNSS measurement, it is determined that the terminal has successfully acquired the GNSS position and the timer has been paused after the terminal starts to perform the GNSS measurement, the timer is resumed.

The "paused" indicates that a pause operation has been performed. With respect to explanations of the pause operation, the above-mentioned related embodiments can be referred to, and will not be elaborated here.

The timer may be the timer T310, the timer T312, the timer T314 or the timer T315.

By using the above manner, if the timer is determined as running when the terminal starts to perform the GNSS measurement, the pause operation is performed on the timer, thereby avoiding the situation where the GNSS measurement is terminated due to expiration of the timer, and avoiding the wasting of the resources occupied by reporting the report due to expiration of the timer. In addition, after the terminal ends the GNSS measurement, if it is determined that the terminal has successfully acquired the GNSS position and the timer has been paused after the terminal starts to perform the GNSS measurement, the timer is resumed, so that the timer can work normally, and the radio link can be reestablished or report can be reported when the timer expires.

FIG. 13 is the flow chart showing the timer processing method according to an exemplary embodiment. The method may be performed by a terminal. As shown in FIG. 13, the method includes the following steps.

In step 1301, the timer is determined as running when the terminal starts to perform the GNSS measurement, and a first operation is performed on the timer, where the first operation includes a stop operation.

In step 1302, after the terminal ends the GNSS measurement, it is determined that the terminal has successfully acquired the GNSS position and the timer has been stopped after the terminal starts to perform the GNSS measurement, the timer is restarted.

The "stopped" indicates that a stop operation has been performed. With respect to explanations of the stop operation, the above-mentioned related embodiments can be referred to, and will not be elaborated here.

The timer may be the timer T310, the timer T312, the timer T314 or the timer T315.

By using the above manner, if the timer is determined as running when the terminal starts to perform the GNSS measurement, the stop operation is performed on the timer, thereby avoiding the situation where the GNSS measurement is terminated due to expiration of the timer, and avoiding the wasting of the resources occupied by reporting the report due to the overtime of the timer. In addition, after the terminal ends the GNSS measurement, if it is determined that the terminal has successfully acquired the GNSS position and the timer has been stopped after the terminal starts to perform the GNSS measurement, the timer is restarted, so that the timer can work normally, and the radio link can be reestablished or report can be reported when the timer expires.

The present disclosure provides the timer processing method, including the following operations.

In some embodiments, when the User Equipment, UE, starts the GNSS measurement, if the timer is running, the timer is stopped, paused or continued. When referring to that the timer is stopped, paused or continued, it means that a stop operation, a pause operation or a continuing operation is performed on the timer. The timer may include the timer T310, the timer T312, the timer T314 or the timer T315. With respect to the features of the such embodiments, the above-mentioned related embodiments can be referred to, and will not be elaborated here.

In some embodiments, the GNSS measurement start timepoint is the start timepoint of the measurement gap for the GNSS measurement configured by the network.

In some embodiments, for the GNSS measurement triggered by Evolved Node B, eNB, the GNSS measurement start timepoint is obtained by adding(+) an offset based on a timepoint when the UE receives the GNSS measurement command sent by the base station. The offset can be 0, or be agreed by the protocol, or be configured by the network. The "adding(+)" here is understood as an addition, and the "offset" here is, for example, the first preset duration mentioned above.

In some embodiments, for the GNSS measurement triggered by the UE, the GNSS measurement start timepoint is obtained by adding(+) an offset based on a timepoint when the GNSS validity duration timer of the UE expires. The offset can be 0, or be agreed by the protocol, or be configured by the network. The "adding(+)" here is understood as an addition, and the "offset" here is, for example, the second preset duration mentioned above.

In some embodiments, if the stop operation or the pause operation is performed on the timer T310, the stop operation or the pause operation is also to be performed on the timer T312. If the continuing operation is performed on the timer T310, the continuing operation, or the stop operation or the pause operation is to be performed on the timer T312. With respect to the features of such embodiments, the above-mentioned related embodiments can be referred to, and will not be elaborated here.

In some embodiments, if the timer T310 expires when the UE is in the measurement period of the GNSS measurement, the UE does not trigger RLF or triggers RLF without initiating reestablishment. With respect to the features of such embodiments, the above-mentioned related embodiments can be referred to, and will not be elaborated here.

In some embodiments, if the timer T310 expires after the UE ends the GNSS measurement, the UE triggers RLF or initiates connection reestablishment. With respect to the features of such embodiments, the above-mentioned related embodiments can be referred to, and will not be elaborated here.

In some embodiments, the ending of the GNSS measurement includes ending of the GNSS measurement duration, or that the UE ends the GNSS measurement in advance before ending of the GNSS measurement duration, or that the GNSS measurement is interrupted due to other reasons. The GNSS measurement duration is the duration of the GNSS measurement configured by the network or agreed upon by the protocol.

In some embodiments, after the UE ends the GNSS measurement, if the timer T310 expires, the UE restarts the timer T310. With respect to the features of such embodiments, the above-mentioned related embodiments can be referred to, and will not be elaborated here.

In some embodiments, after the UE ends the GNSS measurement, if the UE successfully acquires the GNSS position and the timer T310 expires, the UE restarts the timer T310. With respect to the features of such embodiments, the above-mentioned related embodiments can be referred to, and will not be elaborated here.

In some embodiments, if the timer T312 expires when the UE is in the measurement period of the GNSS measurement, the UE does not trigger RLF or triggers RLF without initiating connection reestablishment. With respect to the features of such embodiments, the above-mentioned related embodiments can be referred to, and will not be elaborated here.

In some embodiments, after the UE ends the GNSS measurement, if the timer T312 expires, the UE triggers RLF or initiates connection reestablishment. With respect to the features of such embodiments, the above-mentioned related embodiments can be referred to, and will not be elaborated here.

In some embodiments, after the UE ends the GNSS measurement, if the timer T312 expires, the UE restarts the timer T312. With respect to the features of such embodiments, the above-mentioned related embodiments can be referred to, and will not be elaborated here.

In some embodiments, after the UE ends the GNSS measurement, if the UE successfully acquires the GNSS position and the timer T312 expires, the UE restarts the timer T312. With respect to the features of such embodiments, the above-mentioned related embodiments can be referred to, and will not be elaborated here.

In some embodiments, if the timer T314 expires when the UE is in the measurement period of the GNSS measurement, the UE does not trigger reporting of early detection of physical layer problem. With respect to the features of such embodiments, the above-mentioned related embodiments can be referred to, and will not be elaborated here.

In some embodiments, after the UE ends the GNSS measurement, if the timer T314 expires, the UE triggers reporting of early detection of physical layer problem. With respect to the features of such embodiments, the above-mentioned related embodiments can be referred to, and will not be elaborated here.

In some embodiments, after the UE ends the GNSS measurement, if the timer T314 expires, the UE restarts the timer T314. With respect to the features of such embodiments, the above-mentioned related embodiments can be referred to, and will not be elaborated here.

In some embodiments, after the UE ends the GNSS measurement, if the UE successfully acquires the GNSS position and the timer T314 expires, the UE restarts the timer T314. With respect to the features of such embodiments, the above-mentioned related embodiments can be referred to, and will not be elaborated here.

In some embodiments, if the timer T315 expires when the UE is in the measurement period of the GNSS measurement, the UE does not trigger reporting of early detection of physical layer improvement. With respect to the features of such embodiments, the above-mentioned related embodiments can be referred to, and will not be elaborated here.

In some embodiments, after the UE ends the GNSS measurement, if the timer T315 expires, the UE triggers reporting of early detection of physical layer improvement. With respect to the features of such embodiments, the above-mentioned related embodiments can be referred to, and will not be elaborated here.

In some embodiments, after the UE ends the GNSS measurement, if the timer T315 expires, the UE restarts the timer T315. With respect to the features of such embodiments, the above-mentioned related embodiments can be referred to, and will not be elaborated here.

In some embodiments, after the UE ends the GNSS measurement, if the UE successfully acquires the GNSS position and the timer T315 expires, the UE restarts the timer T315. With respect to the features of such embodiments, the above-mentioned related embodiments can be referred to, and will not be elaborated here.

In some embodiments, after the UE ends the GNSS measurement, if the timer is stopped or paused due to the GNSS measurement, the UE restarts or resumes the timer, where the timer may include the timer T310, the timer T312, the timer T314 or the timer T315. With respect to the features of such embodiments, the above-mentioned related embodiments can be referred to, and will not be elaborated here.

In some embodiments, after the UE ends the GNSS measurement, if the UE successfully acquires the GNSS position and the timer is stopped or paused due to the GNSS measurement, the UE restarts or resumes the timer, where the timer may include the timer T310, the timer T312, the timer T314, or the timer T315. With respect to the features of such embodiments, the above-mentioned related embodiments can be referred to, and will not be elaborated here.

In the above embodiments, UE is the terminal in the foregoing embodiments.

It should be noted that, in the above-mentioned embodiments, multiple embodiments or features separated by "or", even if some of the features are not available, will not affect other solutions. In addition, unless contradiction occurs, the embodiments or implementation methods and various optional solutions involved in different the timer processing methods can be combined with each other, which will not be elaborated here.

FIG. 14 is a block diagram showing the timer processing apparatus according to an exemplary embodiment. As shown in FIG. 14, the timer processing apparatus 1400 includes:

a first determination module 1401, configured to determine that a timer is running when a terminal starts to perform the GNSS measurement, and perform a first operation on the timer, where the timer is a timer related to radio link monitoring, and the first operation includes a stop operation or a pause operation.

In some embodiments, the timer includes a first-type timer, and the first-type timer includes the timer T310 and the timer T312. The first determining module 1401 is specifically configured to:
determine that the timer T310 and the timer T312 are running when the terminal starts to perform the GNSS measurement, and perform the stop operation or the pause operation on the timer T310 and the timer T312.

In some embodiments, the first operation further includes a continuing operation, and the first determining module 1401 is specifically configured to:
determine that the timer T310 and the timer T312 are running when the terminal starts to perform the GNSS measurement, perform the continuing operation on the timer T310; and perform the stopping operation or the pausing operation on the timer T312.

In some embodiments, the first operation further includes a continuing operation, the timer includes the first-type timer, the first-type timer includes the timer T310 or the timer T312, and the timer processing apparatus 1400 further includes:
a second determination module, configured to, when the terminal is in the measurement period of the GNSS measurement, determine that the first-type timer expires, and prohibit the terminal from performing the second operation, where the second operation includes initiating radio link failure or initiating radio link reestablishment.

In some embodiments, the timer processing apparatus 1400 further includes:
a first control module, configured to, after the terminal ends the GNSS measurement, determine that the first-type timer expires, and perform the second operation.

In some embodiments, the timer processing apparatus 1400 further includes:
a third determination module, configured to, after the terminal ends the GNSS measurement, determine that the first-type timer expires, and restart the first-type timer.

In some embodiments, the timer processing apparatus 1400 further includes:
a fourth determination module, configured to, after the terminal ends the GNSS measurement, determine that the first-type timer expires and the terminal has successfully acquired the GNSS position, and restart the first-type timer.

In some embodiments, the first operation further includes the continuing operation, the timer includes a second-type timer, the second-type timer includes the timer T314 or the timer T315, and the timer processing apparatus 1400 further includes:
a fifth determination module, configured to, when the terminal is in the measurement period of the GNSS measurement, determine that the second-type timer expires, and prohibit the terminal from reporting a report.

In some embodiments, the timer processing apparatus 1400 further includes:
a second control module, configured to, after the terminal ends the GNSS measurement, determine that the second-type timer expires, and report the report.

In some embodiments, the timer processing apparatus 1400 further includes:
a sixth determination module, configured to, after the terminal ends the GNSS measurement, determine that the second-type timer expires, and restart the second-type timer.

In some embodiments, the timer processing apparatus 1400 further includes:
a seventh determination module, configured to, after the terminal ends the GNSS measurement, determine that the second-type timer expires and the terminal has successfully acquired the GNSS position, and restart the second-type timer.

In some embodiments, the timer includes the timer T310, the timer T312, the timer T314 or the timer T315, and the timer processing apparatus 1400 further includes:
a first recovery module, configured to, after the terminal ends the GNSS measurement, determine that the timer is paused after the terminal starts to perform the GNSS measurement, and resume the timer.

In some embodiments, the timer includes the timer T310, the timer T312, the timer T314 or the timer T315, and the timer processing apparatus 1400 further includes:
an eighth determining module, configured to, after the terminal ends the GNSS measurement, determine that the timer is stopped after the terminal starts to perform the GNSS measurement, and restart the timer.

In some embodiments, the timer includes the timer T310, the timer T312, the timer T314 or the timer T315, and the timer processing apparatus 1400 further includes:
a second recovery module, configured to, after the terminal ends the GNSS measurement, determine that the terminal successfully acquires the GNSS position and that the timer is paused after the terminal starts to perform the GNSS measurement, and resume running the timer.

In some embodiments, the timer includes the timer T310, the timer T312, the timer T314 or the timer T315, and the timer processing apparatus 1400 further includes:
a ninth determination module, configured to, after the terminal ends the GNSS measurement, determine that the terminal successfully acquires the GNSS position and the timer is stopped after the terminal starts to perform the GNSS measurement, and restart the timer.

With respect to the implementation of each module in the above-mentioned apparatus, the foregoing related embodiments can be referred to, and will not be elaborated here.

The embodiments of the present disclosure further provide a computer-readable storage medium having computer program instructions stored thereon. When the computer program instructions are executed by a processor, the steps of the method described in the above method embodiments are implemented.

The present disclosure also provides a terminal, including:
a processor; and
a memory configured to store instructions executable by the processor,
where processor is configured to perform the steps of the method described in the above method embodiments.

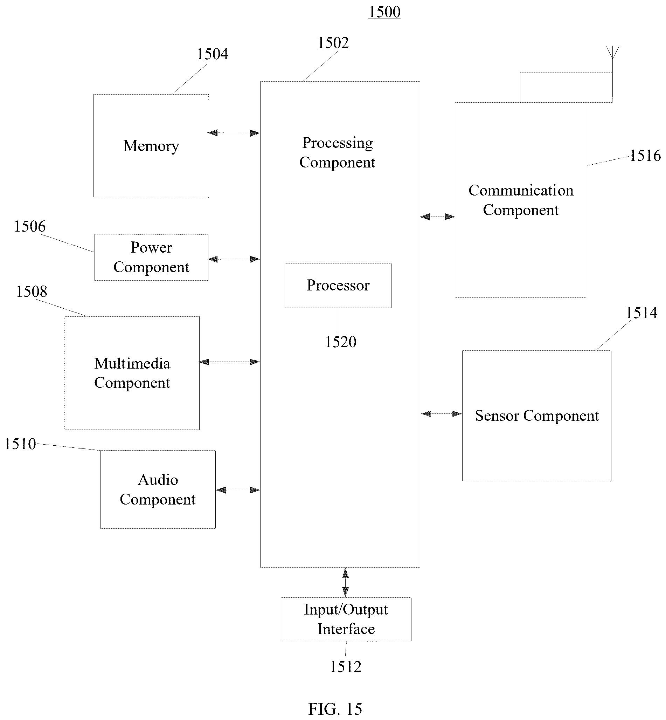

FIG. 15 is a block diagram of the terminal according to an exemplary embodiment. The terminal may be a terminal in the above method embodiments, and the terminal may be a mobile phone, a computer, a digital broadcast terminal, a message transceiving device, a game console, a tablet device, a medical device, a fitness device, a personal digital assistant, and the like.

As shown in FIG. 15, the terminal 1500 may include one or more of the following components: a processing component 1502, a memory 1504, a power component 1506, a multimedia component 1508, an audio component 1510, an input/output interface 1512, a sensor component 1514, and a communication component 1516.

The processing component 1502 generally controls the overall operation of the terminal 1500, such as operations associated with display, phone calls, data communications, camera operations, and recording operations. The processing component 1502 may include one or more processors 1520 to execute instructions to implement all or part of the steps of the timer processing method. In addition, the processing component 1502 may include one or more modules to facilitate the interaction between the processing component 1502 and other components. For example, the processing component 1502 may include a multimedia module to facilitate the interaction between the multimedia component 1508 and the processing component 1502.

The memory 1504 is configured to store various types of data to support operations on the terminal 1500. Examples of such data include instructions, contact data, phone book data, messages, pictures, videos, and the like for any application or method operating on the terminal 1500. The memory 1504 can be implemented by any type of volatile or non-volatile storage apparatus or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1506 provides power to various components of terminal 1500. The power component 1506 may include a power management system, one or more power supplies, and other components associated with generating, managing, and distributing power to terminal 1500.

The multimedia component 1508 includes a screen that provides an output interface between the terminal 1500 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1508 includes a front camera and/or a rear camera. When the terminal 1500 is in an operating mode, such as a shooting mode or a video mode, the front camera and/or the rear camera may receive external multimedia data. Each front camera and the rear camera may be a fixed optical lens system or have a focal length and optical zoom capability.

The audio component 1510 is configured to output and/or input audio signals. For example, the audio component 1510 includes a microphone (MIC), and when the terminal 1500 is in an operation mode, such as a call mode, a recording mode, and a speech recognition mode, the microphone is configured to receive an external audio signal. The received audio signal can be further stored in the memory 1504 or sent via communication component 1516. In some embodiments, the audio component 1510 also includes a speaker for outputting audio signals.

The input/output interface 1512 provides an interface between the processing component 1502 and the peripheral interface modules, such as keyboards, click wheels, buttons, and the like. These buttons may include but are not limited to, a home button, a volume button, a start button, and a lock button.

The sensor component 1514 includes one or more sensors for providing various aspects of status assessment for the terminal 1500. For example, the sensor component 1514 can detect the turn-on/-off state of the terminal 1500, the relative positioning of the components, such as the display and keypad of the terminal 1500. The sensor component 1514 can also detect the position change of the terminal 1500 or a component of the terminal 1500, the presence or absence of user contact with the terminal 1500, the orientation or acceleration/deceleration of the terminal 1500, and the temperature change of the terminal 1500. The sensor component 1514 may include a proximity sensor configured to detect the presence of a nearby object without any physical contact. The sensor component 1514 may also include an optical sensor, such as a CMOS or CCD image sensor, for use in imaging applications. In some embodiments, the sensor component 1514 may also include an acceleration sensor, a gyroscope sensor, a magnetic sensor, a pressure sensor, or a temperature sensor.

The communication component 1516 is configured to facilitate wired or wireless communication between the terminal 1500 and other devices. The terminal 1500 can access a wireless network based on a communication standard, such as WiFi, 2G or 3G, or a combination thereof. In an exemplary embodiment, the communication component 1516 receives a broadcast signal or broadcast-related information from an external broadcast management system via a broadcast channel. In an exemplary embodiment, the communication component 1516 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, terminal 1500 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to implement the timer processing method.

In an exemplary embodiment, a non-transitory computer-readable storage medium including instructions is also provided, such as a memory 1504 including instructions, which can be executed by a processor 1520 of a terminal 1500 to complete the timer processing method. For example, the non-transitory computer-readable storage medium can be a ROM, a random access memory (RAM), a CD-ROM, a magnetic tape, a floppy disk, an optical data storage device, and the like.

In addition to being an independent user device, the terminal 1500 can also be a part of an independent user device. For example, in an embodiment, the device can be an integrated circuit (IC) or a chip, where the integrated circuit can be an IC or a collection of multiple ICs; the chip can include but is not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC, system on chip or system-level chip), and the like The above-mentioned integrated circuit or chip can be used to execute executable instructions (or codes) to implement the above-mentioned timer processing method. The executable instructions can be stored in the integrated circuit or chip, or can be obtained from other apparatuses or equipment, for example, the integrated circuit or chip includes a processor, a memory, and an interface for communicating with other apparatuses. The executable instruction can be stored in the processor, and the above-mentioned timer processing method can be implemented when the executable instruction is executed by the processor; alternatively, the integrated circuit or chip can receive the executable instruction through the interface and transmit it to the processor for execution, so as to implement the above-mentioned timer processing method.

In another exemplary embodiment, a computer program product is further provided. The computer program product includes a computer program executable by a programmable apparatus. The computer program has a code portion for executing the above-mentioned timer processing method when executed by the programmable apparatus.

In another exemplary embodiment, a chip is provided, including a processor and an interface. The processor is used to read instructions to perform the above-mentioned timer processing method.

Those skilled in the art will readily appreciate other embodiments of the present disclosure after considering the specification and practicing the invention disclosed herein. This application is intended to cover any modifications, uses or adaptations of the present disclosure, which follow the general principles of the present disclosure and include common knowledge or customary technical means in the art that are not disclosed in the present disclosure. The description and examples are to be considered as exemplary only, and the true scope and spirit of the present disclosure are indicated by the following claims.

It should be understood that the present disclosure is not limited to the precise structures that have been described above and shown in the drawings, and that various modifications and changes may be made without departing from the scope thereof. The scope of the present disclosure is limited only by the scope of the appended claims.

## Claims

1. A timer processing method, comprising:
determining that a timer is running when a terminal starts to perform GNSS measurement, and performing a first operation on the timer, wherein the timer is a timer related to radio link monitoring, and the first operation comprises a stop operation or a pause operation.

2. The method according to claim 1, wherein the timer comprises a first-type timer, the first-type timer comprises a timer T310 and a timer T312; and
performing the first operation on the timer comprises:
performing the stop operation or the pause operation on the timer T310 and the timer T312.

3. The method according to claim 2, wherein the first operation further comprises a continuing operation, and performing the first operation on the timer comprises:
performing the continuing operation on the timer T310; and
performing the stop operation or the pause operation on the timer T312.

4. The method according to claim 1, wherein the first operation further comprises a continuing operation, the timer comprises a first-type timer, the first-type timer comprises a timer T310 or a timer T312, and the method further comprises:
when the terminal is in a measurement period of the GNSS measurement, determining that the first-type timer expires, and prohibiting the terminal from performing a second operation, wherein the second operation comprises initiating radio link failure or initiating radio link reestablishment.

5. The method according to claim 4, further comprising: after the terminal ends the GNSS measurement, determining that the first-type timer expires, and performing the second operation.

6. The method according to claim 4, further comprising: after the terminal ends the GNSS measurement, determining that the first-type timer expires, and restarting the first-type timer.

7. The method according to claim 4, further comprising: after the terminal ends the GNSS measurement, determining that the first-type timer expires and the terminal has successfully acquired a GNSS position, and restarting the first-type timer.

8. The method according to claim 1, wherein the first operation further comprises a continuing operation, the timer comprises a second-type timer, the second-type timer comprises a timer T314 or a timer T315, and the method further comprises:
when the terminal is in a measurement period of the GNSS measurement, determining that the second-type timer expires, and prohibiting the terminal from reporting a report.

9. The method according to claim 8, further comprising: after the terminal ends the GNSS measurement, determining that the second-type timer expires, and reporting the report.

10. The method according to claim 8, further comprising: after the terminal ends the GNSS measurement, determining that the second-type timer expires, and restarting the second-type timer.

11. The method according to claim 8, further comprising: after the terminal ends the GNSS measurement, determining that the second-type timer expires and the terminal has successfully acquired a GNSS position, and restarting the second-type timer.

12. The method according to claim 1, wherein the timer comprises a timer T310, a timer T312, a timer T314 or a timer T315, and the method further comprises:
after the terminal ends the GNSS measurement, determining that the timer is paused after the terminal starts to perform the GNSS measurement, and resuming the timer.

13. The method according to claim 1, wherein the timer comprises a timer T310, a timer T312, a timer T314 or a timer T315, and the method further comprises:
after the terminal ends the GNSS measurement, determining that the timer is stopped after the terminal starts to perform the GNSS measurement, and restarting the timer.

14. The method according to claim 1, wherein the timer comprises a timer T310, a timer T312, a timer T314 or a timer T315, and the method further comprises:
after the terminal ends the GNSS measurement, determining that the terminal has successfully acquired a GNSS position and that the timer is paused after the terminal starts to perform the GNSS measurement, and resuming the timer.

15. The method according to claim 1, wherein the timer comprises a timer T310, a timer T312, a timer T314 or a timer T315, and the method further comprises:
after the terminal ends the GNSS measurement, determining that the terminal has successfully acquired a GNSS position and that the timer is stopped after the terminal starts to perform the GNSS measurement, and restarting the timer.

16. A timer processing apparatus, comprising:
a first determination module, configured to determine that a timer is running when a terminal starts to perform GNSS measurement, and perform a first operation on the timer, wherein the timer is a timer related to radio link monitoring, and the first operation comprises a stop operation or a pause operation.

17. A terminal, comprising:
a processor; and
a memory configured to store instructions executable by the processor;
wherein the processor is configured to perform steps of the method according to any one of claims 1 to 15.

18. A computer-readable storage medium having computer program instructions stored thereon, wherein, when the computer program instructions are executed by a processor, steps of the method according to any one of claims 1 to 15 are implemented.
